# EUROPÄISCHE PATENTSCHRIFT

(11) **EP 0 834 210 B1**
(45) Veröffentlichungstag und Bekanntmachung des Hinweises auf die Patenterteilung: **30.06.2004**
(21) Anmeldenummer: 97916329.2
(22) Anmeldetag: 06.03.1997
(51) Int. Cl.: H02H 7/085, B60J 7/057

(54) **VORRICHTUNG UND VERFAHREN ZUR ELEKTRONISCHEN ÜBERWACHUNG EINES IN EINEM FAHRZEUG ANGEORDNETEN VERSTELLANTRIEBS**
DEVICE AND PROCESS FOR ELECTRONIC MONITORING OF AN ADJUSTING DRIVE IN A VEHICLE
DISPOSITIF ET PROCEDE POUR LA SURVEILLANCE ELECTRONIQUE D'UN ENTRAINEMENT DE REGLAGE DANS UN VEHICULE

(30) Priorität: 17.04.1996 DE 19615127
(43) Veröffentlichungstag der Anmeldung: 08.04.1998
(73) Patentinhaber: ROBERT BOSCH GMBH, 70442 Stuttgart (DE)
(72) Erfinder: LAMM, Hubert, D-77876 Kappelrodeck (DE); HADERER, Günter, D-77815 Bühl (DE)
(86) Internationale Anmeldenummer: PCT/DE1997/000424
(87) Internationale Veröffentlichungsnummer: WO 1997/039508

(56) Entgegenhaltungen:
- DE-A- 4 020 351
- DE-A- 4 446 117

## Beschreibung

### Stand der Technik

Die Erfindung geht aus von einer Vorrichtung und einem Verfahren zur elektronischen Überwachung eines in einem Fahrzeug angeordneten Verstellantriebs nach der Gattung der unabhängigen Ansprüche. Aus der DE-A 40 20 351 ist schon ein Verfahren zur elektronischen Überwachung und Steuerung des Öffnungs- und Schließvorgangs von elektrisch betriebenen Aggregaten bekannt, bei dem mittels eines zusätzlich zu installierenden Sensors Beschleunigungskräfte, insbesondere in vertikaler Richtung, erfaßt werden.

Die DE 44 46 117 A beschreibt eine Einklemmschutzvorrichtung, bei der die Schließkrafterhöhung im Einklemmfall über das Schneckengetriebe auf die in Längsrichtung bewegliche Motorwelle (Schaft 15) übertragen und dann mittels eines mechanischen Drucksensors (Längsbelastungssensor) erfaßt wird.

### Vorteile der Erfindung

Die erfindungsgemäße Vorrichtung und das erfindungsgemäße Verfahren zur elektronischen Überwachung eines in einem Fahrzeug angeordneten Verstellantriebs über ein Luftdrucksignal haben den Vorteil, daß ein Grenzwert der Schließkraftbegrenzung über ein von einem Luftdrucksensor erfaßtes Luftdrucksignal den geschwindigkeitsabhängigen Kraft- und Druckverhältnissen angepaßt wird. Dadurch können Fehlauslösungen aufgrund hoher Druckunterschiede beispielsweise am Schiebedach infolge hoher Fahrzeuggeschwindigkeit reduziert werden.

Durch die jeweils in den abhängigen Ansprüchen aufgeführten Maßnahmen sind vorteilhafte Weiterbildungen und Ausgestaltungen möglich.

Bevorzugte Verwendung finden die Vorrichtung und das Verfahren bei einem Schiebedach, an dessen Deckel die Druckänderung zu Kraftaufbau führt, und bei Fensterhebern deswegen, weil der Grenzwert bei Änderungen bezüglich eines Referenzdrucks erhöht und das Fehlauslösungsrisiko dadurch gemindert wird.

### Zeichnung

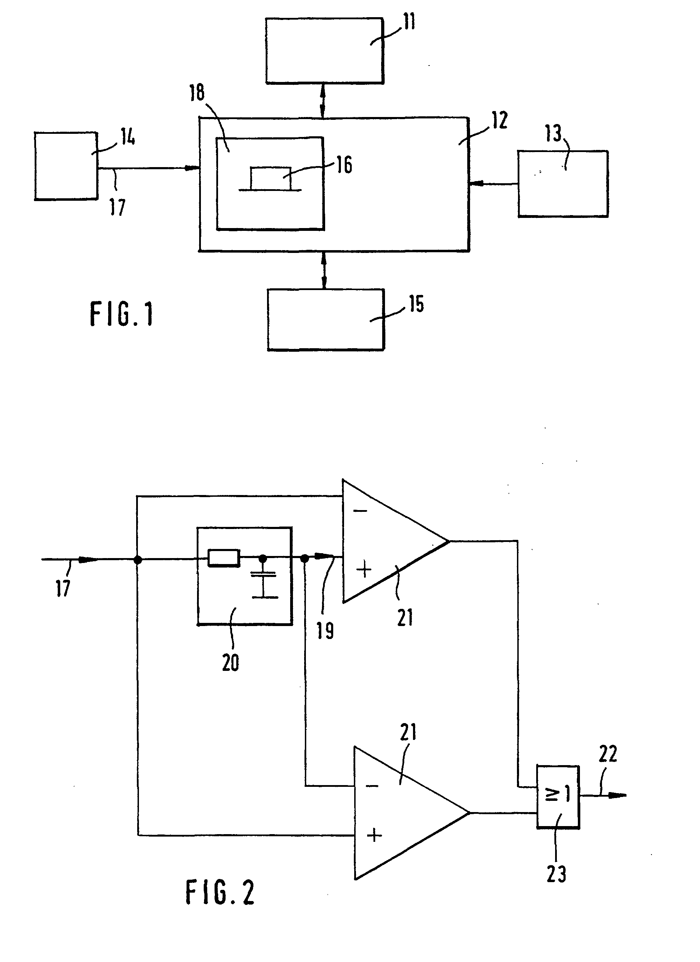

Ein Ausführungsbeispiel einer erfindungsgemäßen Vorrichtung ist in der Figur 1 dargestellt und Figur 2 zeigt ein Prinzipschaltbild einer Luftdrucksignalverarbeitung.

### Beschreibung

In Figur 1 beinhaltet eine Steuerelektronik 12 eine Anordnung 18 zur Bereitstellung wenigstens eines Grenzwerts der Schließkraftbegrenzung, die einen Grenzwert 16 der Schließkraftbegrenzung erzeugt. In die Steuerelektronik 12 fließen ein von einem Luftdrucksensor 14 gebildetes Luftdrucksignal 17 und Signale, die von einer externen Sensorik 13, einem Verstellantrieb 15 und Bedienelementen 11 erzeugt werden, ein. Die Steuerelektronik 12 gibt Signale ab an die Bedienelemente 11 und den Verstellantrieb 15.
Figur 2 zeigt zwei Komparatoren 21, die mit dem Luftdrucksignal 17 und einem Referenzdruck 19, von einem Tiefpaß 20 gebildet, gegensinnig beschaltet werden. Die beiden Komparatorausgangssignale werden durch ein Oder-Gatter 23 verknüpft und bilden ein verarbeitetes Luftdrucksignal 22.

Die in den Figuren 1 und 2 gezeigten Anordnungen arbeiten folgendermaßen:

Über die Bedienelemente 11 wird der Steuerelektronik 12 die gewünschte Betriebsart wie zum Beispiel Schließen eines Schiebedachs mitgeteilt. Die Steuerelektronik 12 überprüft, ob ein Kriterium für Einklemmen vorliegt, das heißt, ob der tatsächliche, gemessene Wert den von der Anordnung 18 ermittelten Grenzwert 16 der Schließkraftfbegrenzung erreicht oder überschreitet. Hat die Steuerelektronik 12 den Verstellantrieb 15 als klemmend erkannt, so erfolgt ein Stoppen oder Reversieren des Verstellantriebs 15. Damit soll die Schädigung einer in den Schließbereich geratenen Person oder des Verstellantriebs 15 ausgeschlossen werden. Bestimmte Situationen führen zu Fehlauslösungen, insbesondere dann, wenn beispielsweise kurzzeitig große Kräfte auf den Verstellantrieb 15 wirken. Dies kann bei hohen Geschwindigkeiten eines sich in Hebelage befindlichen Schiebedachs oder durch Bodenunebenheiten hervorgerufenen Rüttelbewegungen der Fall sein.

Diese Fehlauslösungen werden mit vorliegender Erfindung durch Berücksichtigung der Druckverhältnisse mittels des Luftdrucksignals 17 reduziert, indem die Anordnung 18 das Luftdrucksignal 17 zum Korrigieren des Grenzwerts 16 heranzieht. Bei Druckänderung gibt die Anordnung 18 einen höheren Grenzwert aus. Es ist davon auszugehen, daß die Druckänderung aufgrund der höheren Fahrzeuggeschwindigkeit zustande gekommen ist. Der höhere Kraftaufwand für den Verstellantrieb 15 kann nicht auf ein Verklemmen zurückgeführt werden. Deshalb ist die Erhöhung des Grenzwerts 16 der Schließkraftbegrenzung gerechtfertigt.

Als Luftdrucksensor 14 gibt beispielsweise ein piezoresistiver Halbleiter-Druckaufnehmer ein analoges oder digitalisiertes Signal aus, das zur druckabhängigen Veränderung des Grenzwerts 16 verwendet wird.

Statt des Luftdrucksignals 17 kann der Anordnung 18 auch das verarbeitete Luftdrucksignal 22 zugeführt werden, das wie folgt gebildet wird. Um den Referenzdruck unabhängig von Ort, Temperatur und Wetter zu erfassen, wird entsprechend Figur 2 das Luftdrucksignal 17 zur Referenzdruckbildung herangezogen. Mehrere Vorgehensweisen werden vorgeschlagen. Bei analoger Signalverarbeitung speist das Luftdrucksignal 17 den Tiefpaß 20, der den Referenzdruck 19 als vorzugsweise exponentielle Mittelung des Luftdrucksignals 17 ausgibt. Ändert sich der Druck stark infolge des Schließvorgangs des Schiebedachs, liefert einer der beiden mit dem Referenzdruck 19 und dem Luftdrucksignal 17 beschalteten Komparatoren als verarbeitetes Luftdrucksignal 22 eine steigende Flanke, die der Anordnung 18 als Impuls dient, den Grenzwert 16 zu erhöhen. Gegebenenfalls ist als Ansprechschwelle eine der zulässigen Luftdruckänderung proportionale Spannungsquelle zwischenzuschalten. Auch könnte beispielsweise der Wert der Druckänderung als Maß der Änderung des Grenzwerts 16 dienen. Der Mittelwert des analogen Luftdrucksignals 17 als Referenzdruck 19 kann auch über echte Zeitmittelung bestimmt werden, indem das Luftdrucksignal 17 über einen Spannung/Frequenzumsetzer in Impulse umgesetzt wird, deren Anzahl während eines Meßintervalls proportional zu dem Mittelwert ist. Als weiteres Verfahren liefert die gleitende Mittelung einen Algorithmus für die Referenzdruckbestimmung. Auch durch Differenzierung des ständig erfaßten Luftdrucksignals 17 kann der Anordnung 18 ein Impuls geliefert werden, der die Änderung des Grenzwerts 16 auslöst.

In einer weiteren Ausführungsform dient die Positionserfassung des Verstellantriebs 15 dazu, die Änderung des Grenzwerts 16 über das verarbeitete Luftdrucksignal 22 nur für einen bestimmten Bereich zuzulassen, um positionsabhängigen Belastungsverläufen gerecht zu werden.

Die vorliegende Erfindung ist besonders geeignet für den Verstellantrieb 15 eines Schiebedachs oder eines Fensterhebers.

## Patentansprüche

1. Vorrichtung zur elektronischen Überwachung eines in einem Fahrzeug angeordneten Verstellantriebs (15), mit einer Steuerelektronik (12), einem Vergleicher und einer Anordnung (18) zur Bereitstellung wenigstens eines Grenzwerts einer Schließkraft des Verstellantriebs (15), **dadurch gekennzeichnet, daß** ein Luftdrucksensor (14) zur Ermittlung des Luftdrucks verhanden ist und daß der Anordnung (18) ein Luftdrucksignal (17) zugeführt ist zum Korrigieren des Grenzwerts (16) der Schließkraft.

2. Vorrichtung nach Anspruch 1, **dadurch gekennzeichnet, daß** die Ermittlung des Luftdrucks über den Luftdrucksensor (14) im Innenraum des Fahrzeugs durch gehührt wird.

3. Vorrichtung nach einem der Ansprüche 1 oder 2, **dadurch gekennzeichnet, daß** eine Druckabweichung bezüglich eines Referenzdrucks (19) als verarbeitetes Luftdrucksignal (22) der Anordnung (18) zugeführt ist.

4. Vorrichtung nach Anspruch 3, **dadurch gekennzeichnet, daß** Druckabweichungen bezüglich eines Referenzdrucks (19) in Abhängigkeit der Position des Verstellantriebs (15) der Anordnung (18) zugeführt ist.

5. Vorrichtung nach einem der Ansprüche 1 oder 2, **dadurch gekennzeichnet, daß** der Referenzdruck (19) durch Mittelwertbildung gebildet ist.

6. Vorrichtung nach Anspruch 5, **dadurch gekennzeichnet, daß** die Mittelwertbildung über einen Tiefpaß (20) ausgeführt ist.

7. Vorrichtung nach einem der Ansprüche 1 bis 6 bei der die Schließ kraft des Verstellantriebs (15) eines Kfz-Schiebedachs überwacht wird.

8. Verfahren zur elektronischen Überwachung eines in einem Fahrzeug angeordneten Verstellantriebs (15), wobei eine Steuerelektronik (12), ein Vergleicher und eine Anordnung (18) zur Bereitstellung wenigstens eines Grenzwerts einer Schließkraft des Verstellantriebs (15) vorgesehen sind, **dadurch gekennzeichnet, daß** ein Luftdrucksensor (14) den Luftdruck mißt und daß ein Luftdrucksignal (17) in der Anordnung (18) herangezogen wird zum Korrigieren des Grenzwerts (16) der Schließkraftbegrenzung.

9. Verfahren nach Anspruch 8, **dadurch gekennzeichnet, daß** der Luftdrucksensor (14) den Luftdruck im Innenraum des Fahrzeugs mißt.

10. Verfahren nach einem der Ansprüche 8 oder 9, **dadurch gekennzeichnet, daß** eine Druckabweichung bezüglich eines Referenzdrucks (19) als verarbeitetes Luftdrucksignal (22) der Anordnung (18) zugeführt wird.

11. Verfahren nach einem der Ansprüche 8 oder 9, **dadurch gekennzeichnet, daß** Druckabweichungen bezüglich eines Referenzdrucks (19) in Abhängigkeit der Position des Verstellantriebs (15) der Anordnung (18) zugeführt wird.

12. Verfahren nach einem der Ansprüche 8 oder 9, **dadurch gekennzeichnet, daß** der Referenzdruck (19) durch Mittelwertbildung gebildet wird.

13. Vorrichtung nach Anspruch 5, **dadurch gekennzeichnet, daß** die Mittelwertbildung über einen Tiefpaß (20) ausgeführt wird.

14. Verfahren nach einem der Ansprüche 8 bis 12 **gekennzeichnet durch** Verwendung bei einem Kfz-Schiebedach.

## Claims

1. Device for electronically monitoring an adjusting drive (15) arranged in a vehicle, having an electronic control system (12), a comparator and an arrangement (18) for making available at least one limiting value of a closing force of the adjusting drive (15),
**characterized in that** an air pressure sensor (14) for determining the air pressure is present, and **in that** an air pressure signal (17) is fed to the arrangement (18) in order to correct the limiting value (16) of the closing force.

2. Device according to Claim 1, **characterized in that** the air pressure is determined by means of the air pressure sensor (14) in the interior of the vehicle.

3. Device according to one of Claims 1 or 2, **characterized in that** a pressure deviation from a reference pressure (19) is fed as a processed air pressure signal (22) to the arrangement (18).

4. Device according to Claim 3, **characterized in that** pressure deviations from a reference pressure (19) are fed to the arrangement (18) as a function of the position of the adjusting drive (15).

5. Device according to one of Claims 1 or 2, **characterized in that** the reference pressure (19) is formed by the formation of average values.

6. Device according to Claim 5, **characterized in that** the formation of average values is carried out by means of a low-pass filter (20).

7. Device according to one of Claims 1 to 6, in which the closing force of the adjusting drive (15) of a motor vehicle sunroof is monitored.

8. Method for electronically monitoring an adjusting drive (15) arranged in a vehicle, an electronic control system (12), a comparator and an arrangement (18) for making available at least one limiting value of a closing force of the adjusting drive (15) being provided, **characterized in that** an air pressure sensor (14) measures the air pressure, and **in that** an air pressure signal (17) in the arrangement (18) is used to correct the limiting value (16) of the limitation of the closing force.

9. Method according to Claim 8, **characterized in that** the air pressure sensor (14) measures the air pressure in the interior of the vehicle.

10. Method according to one of Claims 8 or 9, **characterized in that** a pressure deviation from a reference pressure (19) is fed as a processed air pressure signal (22) to the arrangement (18).

11. Method according to one of Claims 8 or 9, **characterized in that** pressure deviations from a reference pressure (19) are fed to the arrangement (18) as a function of the position of the adjusting drive (15).

12. Method according to one of Claims 8 or 9, **characterized in that** the reference pressure (19) is formed by the formation of average values.

13. Device according to Claim 5, **characterized in that** the formation of average values is carried out by means of a low-pass filter (20).

14. Method according to one of Claims 8 to 12, **characterized by** use in a motor vehicle sunroof.

## Revendications

1. Dispositif pour la surveillance électronique d'un entraînement de réglage (15) monté dans un véhicule, comprenant une électronique de commande (12), un comparateur et un dispositif (18) pour la production d'au moins une valeur limite d'une force de fermeture de l'entraînement de réglage (15),
**caractérisé en ce qu'**
un capteur de pression d'air (14) est prévu pour déterminer la pression d'air et un signal de pression d'air (17) est envoyé au dispositif (18) pour corriger la valeur limite (16) de la force de fermeture.

2. Dispositif selon la revendication 1,
**caractérisé en ce que**
la détermination de la pression d'air est effectuée dans l'espace intérieur du véhicule par le capteur de pression d'air (14).

3. Dispositif selon une des revendications 1 ou 2,
**caractérisé en ce qu'**
un écart de pression relatif à une pression de référence (19) est envoyé comme signal de pression d'air traité (22) au dispositif (18).

4. Dispositif selon la revendication 3,
**caractérisé en ce que**
des écarts de pression relatifs à une pression de référence (19) sont envoyés au dispositif (18) en fonction de la position de l'entraînement de réglage (15).

5. Dispositif selon une des revendications 1 ou 2,
**caractérisé en ce que**
la pression de référence (19) est formée par une moyenne.

6. Dispositif selon la revendication 5,
**caractérisé en ce que**
la formation de moyenne est effectuée au moyen d'un filtre passe-bas (20).

7. Dispositif selon une des revendications 1 à 6,
**caractérisé en ce qu'**
on surveille la force de fermeture de l'entraînement de réglage (15) d'un toit coulissant d'un véhicule automobile.

8. Procédé pour la surveillance électronique d'un entraînement de réglage (15) agencé dans un véhicule, dans lequel sont prévus une électronique de commande (12), un comparateur et un dispositif (18) servant à produire au moins une valeur limite d'une force de fermeture de l'entraînement de réglage (15),
**caractérisé en ce qu'**
un capteur de pression d'air (16) mesure la pression d'air et un signal de pression d'air (17) est utilisé dans le dispositif (18) pour corriger la valeur limite (16) de la limitation de la force de fermeture.

9. Procédé selon la revendication 8,
**caractérisé en ce que**
le capteur de pression d'air (14) mesure la pression d'air dans l'espace intérieur du véhicule.

10. Procédé selon une des revendications 8 ou 9,
**caractérisé en ce qu'**
un écart de pression relatif à une pression de référence (19) est envoyé comme signal de pression d'air traité (22) au dispositif (18).

11. Procédé selon une des revendications 8 ou 9,
**caractérisé en ce que**
des écarts de pression relatifs à une pression de référence (19) sont envoyés au dispositif (18) en fonction de la position de l'entraînement de réglage (15).

12. Procédé selon une des revendications 8 ou 9,
**caractérisé en ce que**
la pression de référence (19) est formée par une moyenne.

13. Procédé selon la revendication 12,
**caractérisé en ce que**
la formation de moyenne est effectuée au moyen d'un filtre passe-bas (20).

14. Procédé selon une des revendications 8 à 12,
**caractérisé en ce qu'**
il est utilisé pour un toit ouvrant coulissant de véhicule automobile.
